# EUROPEAN PATENT SPECIFICATION

(11) **EP 0 556 374 B1**
(45) Date of publication and mention of the grant of the patent: **25.06.1997**
(21) Application number: 92919234.2
(22) Date of filing: 07.09.1992
(51) Int. Cl.: C08F 4/02, B01J 35/08

(54) **A GRANULAR CATALYST COMPONENT FOR POLYMERIZING OLEFINS, ITS USAGE IN THE POLYMERIZATION OF OLEFINS AND A METHOD FOR ITS PREPARATION**
TEILCHENFÖRMIGER KATALYSATORBESTANDTEIL ZUR POLYMERISATION VON OLEFINEN, SEINE VERWENDUNG ZUR OLEFINPOLYMERISATION UND VERFAHREN ZU SEINER HERSTELLUNG
CONSTITUANT CATALYTIQUE GRANULE DESTINE A LA POLYMERISATION D'OLEFINES, SON UTILISATION DANS LA POLYMERISATION D'OLEFINES ET SON PROCEDE DE PREPARATION

(30) Priority: 05.09.1991 FI 914192
(43) Date of publication of application: 25.08.1993
(73) Proprietor: BOREALIS A/S, 2800 Lyngby (DK)
(72) Inventor: GAROFF, Thomas, SF-00840 Helsinki (FI); LEINONEN, Timo, SF-06650 Hamari (FI); METSÄLÄ, Olli, SF-06150 Porvoo (FI)
(74) Representative: Ruffles, Graham Keith
(86) International application number: FI9200237
(87) International publication number: WO9305078

(56) References cited:
- EP-A- 0 320 549
- Dialog Information Systems: File 351, (World Patents Index latest), Dialog Accession No. 004838595, WPI Accession No. 86- 341936/52,
- PATENT ABSTRACTS OF JAPAN, Vol. 79, No. 49, Abstract of JP 79039876, publ 1979- 11-30 MITSUI PETROCHEM IND LTD.

## Description

The invention relates to granular catalyst components, which may be used as such or as polymerizing catalysts of olefines or together with other components in a polymerization catalyst system for polymerizing olefines. The invention also relates to a method for preparing such catalyst components.

In the polymerization of olefines it is generally used e.g. a Ziegler-Natta catalyst system, which comprises a co-called procatalyst and a cocatalyst. The procatalyst is a component, which is based on a transition metal belonging to some of the groups IB-VIII of the periodic system on a carrier. The procatalysts determined in this way are often called solely catalysts, which are added to a polymerization reactor together with cocatalysts and optional external electron donor compounds. In this patent application, the terms "procatalyst" and "catalyst" mean the same thing. As a carrier it is very generally used magnesium chloride and as a transition metal titanium. As a cocatalyst it is generally used organometallic compounds of metals belonging to the groups IA-IIIA of the periodic system. The catalyst system generally also contains electron donor compounds improving and modifying the catalytic properties.

Another catalyst system generally used in the polymerization of olefines is based on chromium compounds on an inert carrier.

From the point of view of the polymerization, it is preferable that the activity of the catalysts is as high as possible and thereby the amount of the catalyst needed per product unit as low as possible. In addition, the selection of the catalyst affects very many polymerization properties. Attempts are often made for achieving in the polymerization a product, which is in the form of uniform-quality, preferably spherical particles. This may be obtained, if the catalyst is in the form of uniform-quality particles of a corresponding shape.

In the Ziegler-Natta polymerization the morphology of the catalyst, especially the form of the catalyst particles and the distribution of the particle size are of a very great importance, since it has an affect on many product properties. The bulk density is one of the most important properties, which affects the economy of the entire production process. Thus, the adjusting possibilities of the morphology of the catalyst are extremely preferable in the preparation of catalysts.

An old method for adjusting the morphology of a catalyst is a careful precipitation of the catalyst carrier in extremely accurate conditions. The method has been widely used in the precipitation of titanium chloride in particle form. In an emulsion process, the carrier material is melted and it is agitated in an inert solvent. Small droplets are produced as a result of the agitation, whose form is bound by means of shock cooling. In addition to this, so-called spray methods have been used, in which the carrier material is melted, dropped by spraying by means of a nozzle, and thereafter the droplets are either spray dried or spray frozen for further treatment.

By means of these methods, it is possible to affect the morphology of the catalyst before its activation for polymerization. However, with these methods it is not possible considerably to affect the particle size distribution of the catalyst particles procuced. The said property may be improved by sieving the product obtained.

In all catalyst preparation methods, there are produced more or less fine fractions, in which the particles are considerably smaller than the desired particle size. The fine fractions have to sieved away, since they decrease the economy of the polymerization process. In addition, in certain catalyst preparation methods pulverizing is utilized, which produces a large amount of fine fractions. Obtaining the desired morphology in the pulverizing methods is very difficult. The occurrence of fine fractions means a very large material loss, since unusable fine fractions must have been thrown away.

Thus, there is an apparent need for catalyst components, which have the desired morphology, especially a particle size and a narrow particle-size distribution and most preferably also a spherical particle shape.

The object of the present invention is to create granular catalyst components, in which the catalyst granules are spherical or round by shape and have an adjustable, narrow particle size distribution. A certain object of the present invention is a method for preparing catalyst components of the type mentioned above. A certain object of the invention is also a method, in which fine fractions lacking the above-mentioned morphological properties may be utilized. A further object of the invention is the usage of these granular catalyst components as catalysts or catalyst components in polymerization systems of olefines.

Thus, the invention is based on a granular catalyst component for such polymerizing catalysts of olefines, which include one or more catalytically active transition metal compounds belonging to the groups IV-VIII of the periodic system and combined with a carrier as well as optionally one or more compounds acting as an auxiliary agent or an electron donor. The inventive catalyst component is characterized in that the catalyst component is formed layer by layer from particles containing constituents of the catalyst component being essentially smaller than the desired granular size by repeatedly layering on top of the particles a solution or a suspension containing said constituents of said catalyst component, until the desired granular size is obtained. The granular catalyst component of the invention is claimed in Claims 1 to 18.

The invention also relates to a method for preparing granular catalyst components for such polymerizing catalysts of olefines, which contain one or more catalytically active transition metal compound belonging to the groups IV-VIII of the periodic system and combined with a carrier as well as optionally one or more compounds acting as an auxiliary agent or an electron donor. The inventive method is characterized in that on the surface of the particles containing constituents of the catalyst component being essentially smaller than the desired granular size there is layered repeatedly a solution or a suspension containing said constituents of the catalyst component so that said particles are moistened with said solution or suspension and said solution or suspension medium is evaporated, until the desired granular size is obtained. The method of the invention is claimed in claims 19 to 38.

In connection with this invention, the granular catalyst component refers to such a constituent of the catalyst, which is in the form of particle-like, round and most preferably spherical particles, whereby the particle size distribution may be selected from a wide range, e.g. 10-1000 µm, but yet as narrow as desired, preferably in the range of 30-100 µm.

By means of the invention, several important advantages are obtained. First of all, the catalyst components may be prepared from raw materials, which are produced in conventional catalyst preparation methods, but which have to be rejected and thrown away, since they are too small by their particle size. Another important advantage is the fact that the inventive catalyst components are in the form of uniformly-sized, spherical particles in the desired particle size range. A third important advantage is the fact that the inventive catalyst components are mechanically very durable and that they do not pulverize into a fine form in the activation treatments of the catalyst or in the polymerization itself. A forth important advantage is the fact that by means of the invention there is obtained high flexibility in the preparation of catalysts, since by means of the method it is possible to prepare catalyst components of different preparation degrees from mere carrier particles up to catalysts ready for polymerization.

One further advantage is that by means of the invention it is possible to prepare catalysts from catalyst components ready for polymerization, which components have been prepared in advance. As a consequence it is possible to prepare from example mixed catalysts by combining catalyst components having different polymerization properties. By using this kind of mixed catalysts it is possible to manufacture for example bimodal polyethylene in a single polymerization step instead of conventional multi-step processes.

In its most extensive form, the inventive catalyst components are formed from a carrier only. Carriers may be formed e.g. from inorganic or organic magnesium compounds or from oxides of silicon, aluminium or titanium. Inorganic magnesium compounds include halogenides, hydroxy halogenides, alkoxides, hydroxides and silicates of magnesium. An especially suitable carrier in the inventive catalyst components is magnesium dichloride.

Suitable organic magnesium compounds include chlorination products of organic magnesium compounds.

Suitable oxides of silicon or aluminium are e.g. silica and alumina.

When the carrier is magnesium dichloride, it is preferable that the magnesium chloride is first brought into an amorphous form, whereby its activation with a transition metal at a later step becomes possible. The bringing into the amorphous form may be performed by means of any known method, e.g. by grinding in a ball mill or jet pulverizer, which results in readily very fine-fractioned magnesium chloride, which is very suitable to be used in the inventive catalyst components. An amorphous magnesium chloride may also be obtained in other ways, e.g. by chlorinating organomagnesium compounds, such as magnesium alkyl compounds, or by sublimating magnesium chloride, whereby an amorphous magnesium chloride in a fine-fractioned form is obtained.

As a final result of the repeated layering there is obtained carrier particles having the desired particle size and the particle size distribution, e.g. magnesium chloride particles, in which the amorphousness is present and which have the desired morphology. These carrier particles may then be used in conventional ways for adding the other components of the catalyst, such as transition metal compounds, and for forming active procatalysts or catalysts.

The cohesion of the carrier particles prepared in the above-mentioned manner may be improved by adding to the particle suspension, from which the carrier particles are prepared by layering, some cohesion-advancing substance, which has adhesive properties and which does not detrimentally affect the properties of completed catalysts. Such binders may be subtances dissolving or suspending in the reactant particle suspension, the boiling point of which substances is higher than the boiling point of the suspension medium and which in connection with the removal of the medium thus remain in the carrier particles. Suitable binders are e.g. water and alcohols. Especially suitable binders are such binders, which are otherwise needed in the preparation of completed catalysts, such as alcohols and certain electron donor compounds.

According to another inventive embodiment, as the starting material of the carrier particles there are used chemically activated magnesium halide compounds, such as magnesium dichloride compounds. A conventional activation method is the forming of alcohol complexes of magnesium dichloride. The alcohol of the complexes reacts with a transition metal compound to be used in the activation of a procatalyst or catalyst, and in the same connection the crystalline structure of the magnesium dichloride is removed.

The layering of the carrier particles thus activated into the desired particle size occurs then in the same way as above described, which results in magnesium dichloride alcohol complex particles having a uniform particle size in the desired range, which particles may then be activated with a transition metal compound, such as titanium tetrachloride, in a conventional manner.

According to a third inventive embodiment, the catalyst component is obtained by layering on the carrier particles also electron donor compounds. Suitable electron donor compounds are e.g. compounds according to a formula R₁COOR₂, in which R₁ and R₂ is a hydrocarbon group containing 1-20 carbon atoms. Thus, suitable electron compounds are e.g. aromatic esters and diesters, but all known electron donor compounds may be applied in the inventive catalysts. Especially suitable electron donor compounds are e.g. ethyl benzoate and diisobutyl phtalate, since they simultaneously act as effective adhesion-advancing substances.

In this case, the layering is performed from a solvent or suspension, which contains in addition to the carrier component also said electron donor. As a final result of the layering there are obtained catalyst components provided with an electron donor, which components, after the treatment with a transition metal compound, may be applied directly to polymerization.

According to a further inventive embodiment, the catalyst components are layered from a solution or a suspension, which also contains a transition metal compound needed in the activation of the catalyst. The layering may then be performed by using a solution or a suspension, which in addition to other constituents also contains a transition metal compound needed in the activation of the catalyst. The transition metal compound and a potential electron donor compound may naturally be added also into the completely layered carrier component in conventional ways.

According to a further inventive embodiment of the invention the catalyst components are layered from a solution or suspenrion, which contains ready-to-use catalyst particles prepared or obtained in advance. Thereby it is possible by means of the invention to prepare catalysts from any functional catalyst components, which have been produced by various methods, for example Ziegler-type catalysts or chromium-type catalysts.

According to a further inventive embodiment of the invention catalysts can be layered from a solution or suspension, which contains two or more different kind of ready-to-use catalyst components. Thereby it is possible to prepare catalysts, which produce for example bimodal products in one reactor instead of using two or more sequential reactors. One possibility is to prepare catalysts containing catalyst components, which are hydrogen sensitive and catalyst components, which are hydrogen insensitive. In the same way it is possible to prepare catalysts containing catalyst components, which are sensitive for certain comonomers and catalyst components, which are insensitive for the same comonomers.

In accordance with the most widest embodiment of the invention, particles containing constituents of the catalyst component being essentially smaller than the desired granular size are repeatedly moistened with said solution or suspension, whereafter the solvent or the suspension medium is evaporated. The moistening and the drying may preferably be performed by means of a similar technique, which is used e.g. in the preparation of granules from inorganic subtances, e.g. from fertilization chemicals. The moistening and the drying are thus preferably performed on a fluidized bed, into which there is sprayed a solution or suspension containing the constituents of the catalyst component, which solution or suspension moistens the particles on the fluidized bed. Simultaneously, air or an inert gas is blown into the fluidized bed, which keeps the bed in a fluidized state and makes the layer on the surfaces of the particles to dry and the granular size simultaneously gradually increases.

In the moistening there may be utilized any inert fluid boiling at a suitable temperature range, which fluid does not detrimentally affect the properties of the catalyst component. Suitable mediums are e.g. hydrocarbons boiling at a relatively low temperature, which are used in conventional catalyst preparation methods. Examples of suitable hydrocarbons are e.g. pentane, hexane, heptane and octane.

The cohesion of the carrier particles obtained in the repeated moistening and drying may be improved by adding to the particle suspension, by means of which the carrier particles are moistened, some cohesion improving substance, which has adhesive properties and which does not affect detrimentally the properties of completed catalysts. Such binders may be subtances dissolving or suspending in the reactant particle suspension, the boiling point of which substances is higher than the boiling point of the suspension medium and which in connection with the evaporation step of the medium thus remain in the carrier particles. Suitable binders are e.g. water and alcohols. Especially suitable are such binders, which are otherwise needed in the preparation of completed catalysts, such as alcohols and certain electron donor compounds, e.g. ethyl benzoate and diisobutyl phtalate.

When catalyst components within a certain particle size range are desired, part of the amount of particles on the fluidized bed may be circulated out and it is possible to perform the sorting with conventional methods. After this, the particles with the desired particle size are removed as a final product, and the particles smaller than the desired particle size are returned to the fluidized bed for increasing the particle size according to the invention.

As the fluidizing and drying gas used in the layering exits from the upper part of the layering vessel, the dusty materials therein may be separated in the same way e.g. by filtering and returned thereafter to the process, whereby applicable constituents of the catalysts are not wasted.

In accordance with a still further embodiment of invention there is first intentionally prepared particle-like catalyst components having a particle size essentially smaller than the intended particle size of the completed catalyst component, after which by means of the layering to be performed in the manner described above catalyst components having the desired particle size are formed from the reduced catalyst components.

The invention is described in detail with reference to certain preferred inventive embodiments shown in the figures of the accompanying drawings, to which embodiments the invention is yet not intended solely to be limited.

Fig. 1 shows a certain equipment for realizing the inventive method as a schematic side view.

Fig. 2 shows the laboratory equipment used in the example of the invention as a schematic side view.

Fig. 3 shows the size distribution of catalyst particles obtained in a comparison test as a graphic representation.

Fig. 4 shows the size distribution of catalyst particles obtained in the inventive method as a graphic representation.

Fig. 5 shows the particle size distribution of polymer particles obtained in a comparison test as a graphic representation.

Fig. 6 shows the particle size distribution of polymer particles obtained in the inventive method as a graphic representation.

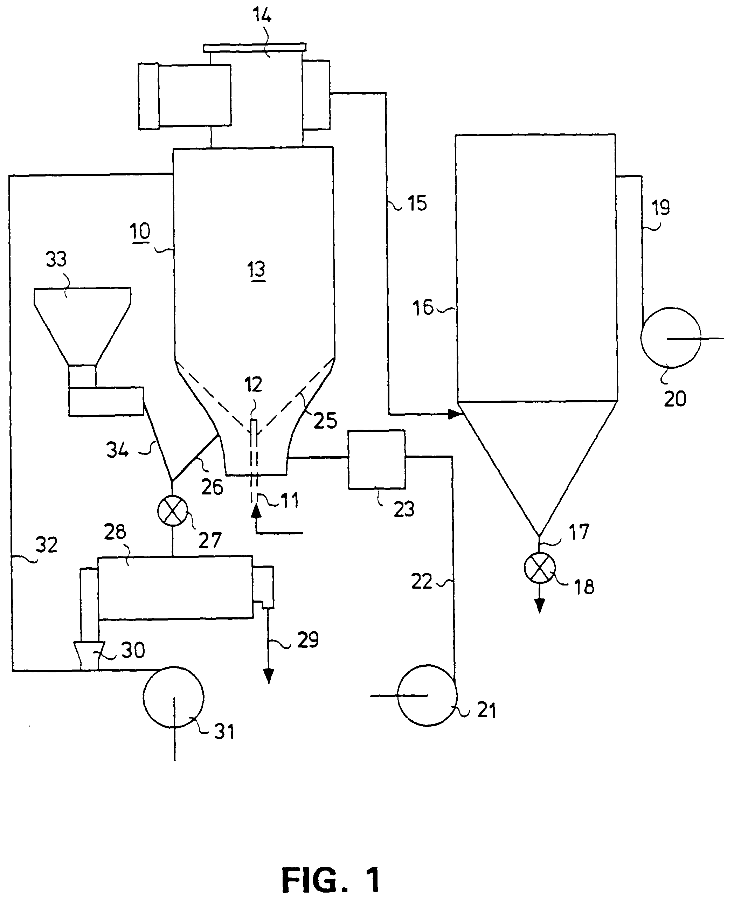

It is to be noted that the equipment representation of Fig. 1 is only principal so that various modifications are possible. In Fig. 1, the inventive layering device is denoted by a reference number 10. A suspension or solution containing constituents of the catalyst component and an inert solution or a suspension medium, is sprayed via one or more nozzles 12 of a conduit 11 into a drying area 12 of the layering device 10.

The upper part of the layering device 10 may be provided with an air sorter 14, which removes from the drying gas catalyst component particles contained therein and returns them to a drying zone 13. The drying gas exiting from the upper part of the layering device 10 may be led via a conduit 15 to a filter 16, where the dusty substance contained in the drying gas is separated from the drying gas and removed via a tube 17 and a valve 18. When so desired, this dusty fraction may be returned to the layering device 10. The pure drying gas is led away from the filter 16 via a conduit 19 by means of a blower 20 to the circulation of the drying gas.

Drying air is circulated via a blower 21 and a conduit 22 as well as, when so desired, via a heat exchanger 23 to the lower part of the layering device 10, from which it is uniformly distributed to the drying layer 13 by means of a sieve plate 25, which is preferably conical, but a sieve plate of some other form is possible, and it is not necessary to use a sieve plate in all cases.

Part of the material in the drying zone 13 is continuously removed via a conduit 26 and a feeder 27 to a sorter 28, in which the product is sieved. A dust-free, completed product is removed from the sorter via a conduit 29. The particles smaller than the desired particle size are returned to the layering e.g. by means of a pneumatic conveyor equipment 30 via a blower 31 and a conduit 32. Starting material particles may be added e.g. via a dosing device 33 and a tube 34, but this addition may naturally be made directly into the drying zone 13.

### Example

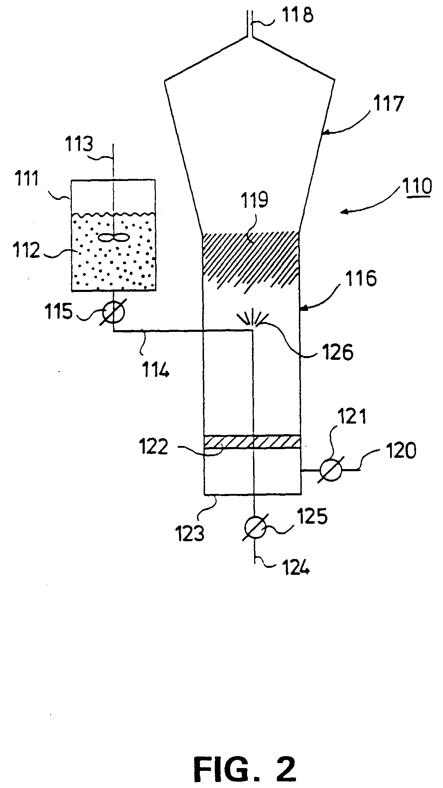

A catalyst carrier was prepared from a fine-divided complex of magnesium chloride and ethanol MgCl₂.3EtOH having a particle size in the range 5 µm. The complex was suspended into a 5% mixture of pentane, and to the mixture there was added also water less than 1%. Layered carrier components according to the invention were prepared from the suspension by utilizing the laboratory equipment shown in Fig. 2.

The laboratory equipment denoted by the reference numer 110 includes a suspension container 111, in which the the carrier component is readily suspended into an evaporable hydrocarbon 112, such as pentane or heptane, and the suspension is agitated with a mixer 113. The suspension is led from the container 111 via a tube 114 and a valve 115 to a granulation vessel, which is formed of a bed tube 16 and an expanding separation section 117. In the separation section, the gas and the carrier components are separated, whereby the gas is discharged via an outlet tube 118 and the carrier particles descend back to the bed 119.

The bed 119 is kept in a fluidized condition, e.g. by means of nitrogen, which is led to the lower end of the bed tube 116 via a tube 120 and a valve 121. The gas flow is made uniform by means of a sinter 122.

Through the bottom 123 another gas flow is led via a tube 124 and a valve 125 up to a mouth 126 of the fluid feeding tube 114. This gas flow, which is adjusted by means of the valve 125, dispenses the fluid flow coming from the tube 114, in which fluid flow the carrier or catalyst components are in a suspended state. The gas feeding lines 120 and 124 may be heated. Also the layering vessel 116, the suspension vessel 111 and the feeding line 114 of the suspension may be heated.

The granulation conditions in the example were as follows:

| | |
|---|---|
| Component to be granulated | MgCl₂.3EtOH, granular size 5 µm |
| Suspension medium | pentane |
| Suspension concentration | 5% |
| Suspension temperature | 20°C |
| Suspension feeding rate | 6 ml/min |

| | |
|---|---|
| Temperature of suspension disperser nitrogen | 120°C |
| Feeding rate of disperser nitrogen | 3 l/min |

| | |
|---|---|
| Temperature of drying nitrogen | 120°C |
| Feeding rate of drying nitrogen | 10 l/min |

| | |
|---|---|
| Temperature in granulation zone | ca. 70°C |
| Granulation time | 50 min |

A polymerizing catalyst was prepared by means of the equipment described above from MgCl₂.3EtOH carrier particles by suspending 0.1 mol of the carrier in inert conditions into 300 ml of titanium tetrachloride and into 150 ml of heptane. The suspension was cooled down to -15°C. The temperature was then raised to the boiling point. The mixture was allowed to cool down to room temperature, after which 0.01 mol of diisobutyl phtalate (DIBP) was added as internal donor. The catalyst component was separated and washed with pentane.

In a comparison test, a similar catalyst was prepared, but the inventive granulation step was omitted.

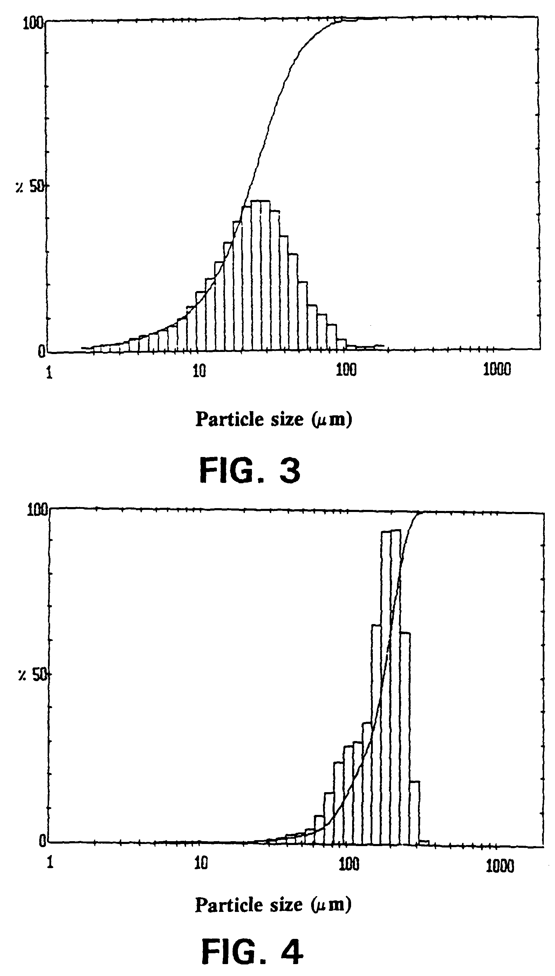

Particles distributions were measured from the catalysts obtained, which distributions are shown is Fig. 3 and 4. The results indicate that in the inventive catalyst, 90% of the amount of the substance was as particles having a size in the range of 88-250 microns, whereas in the comparison catalyst, 90% of the amount of subtance was as particles having a size in the range of 8-53 microns. In the inventive catalyst, the particle size distribution was also clearly more narrow, although no intermediate sorting was used in its preparation, which would naturally have caused a still more preferable and narrow particle size distribution.

A test polymerization was performed by using the inventive catalyst and the comparison catalyst. The polymerization was performed in a 2 l test reactor by using 20-30 mg of the catalyst, into which there was mixed 620 µl of triethyl aluminium chloride and a 25% heptane solution of 200 µl of cyclohexane methyl metoxy silane (CMMS) as a donor. The polymerization was performed at 70°C and at a propylene pressure of 10 bar. The partial pressure of hydrogen during the polymerization was 0.2 bar. The polymerization was continued for three hours. Prepolymerization occurred at the beginning of the polymerization for ca. 10 minutes, whereby the temperature and the pressure increased to the desired values.

The actitivity of the catalysts used was measured on the basis of the polymerization yield. The soluble fractions of the polymers were measured by evaporating from the polymerization solution. By using these conditions, polymers having a melt index of ca. 8, were obtained.

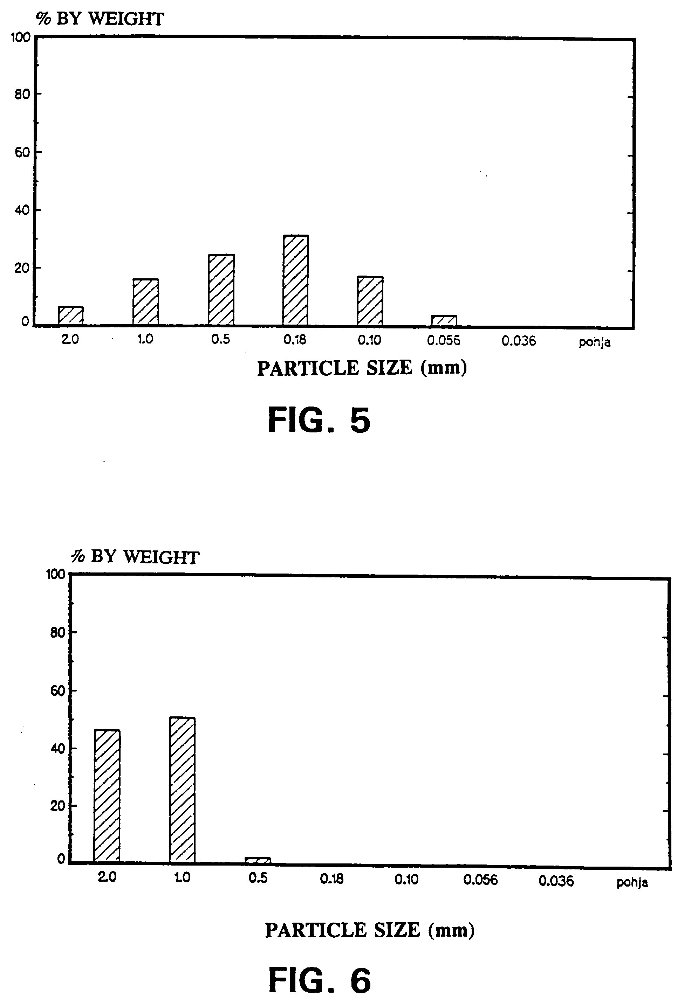

In the enclosed Table 1 there are shown the particle size distributions of the polymers obtained by using the comparison catalyst and the inventive catalyst component. The corresponding results are shown in Fig. 5 and 6 in a graphic form.

**Table 1:**

| Particle size distribution | | | | | | | | |
|---|---|---|---|---|---|---|---|---|
| Polymer | % of polymer particles, whose diameter is larger than | | | | | | | |
| | 2 mm | 1 mm | .5 mm | .18 mm | .1mm | .056 mm | .036mm | fines |
| Comparison catalyst | 6.3 | 15.9 | 24.9 | 30.8 | 17.8 | 4.1 | 0.1 | 0.1 |
| Inventive catalyst | 46.3 | 50.8 | 2.7 | 0.1 | 0.1 | | | |

**Table 2:**

| Polymerization results | | | |
|---|---|---|---|
| Catalyst | Activity kgPP/g cat. | Isotacticity % | Bulk density of polymer g/ml |
| Comparison catalyst | 12.1 | 97.8 | 0.28 |
| Inventive catalyst | 12.3 | 97.6 | 0.44 |

The results show that by means of the inventive catalyst it is possible both to increase the polymer particle size and simultaneously to clearly decrease clearly the particle size distribution, which is directly indicated e.g. by the bulk density of the product.

## Claims

1. A granular catalyst component of predetermined particle size for polymerizing catalysts of olefins, which contains one or more catalytically active transition metal compounds belonging to the groups IV-VIII of the periodic system and combined with a carrier as well as optionally one or more compounds acting as an auxiliary agent or an electron donor, characterized in that the catalyst component is formed by a process comprising increasing the particle size of catalyst components having a particle size smaller than the desired size using a solution or suspension medium containing catalyst particle constituents by continuously repeating the following steps:
(a) layering onto said component particles the solution or suspension medium containing catalyst particle constituents by moistening said particles with said solution or suspension medium and evaporating said solution or suspension medium,
(b) removing catalyst particles having a desired particle size, and
(c) returning catalyst particles having a particle size smaller than desired to step (a);
until the desired granular size is reached.

2. A catalyst component according to claim 1, **characterized** in that in said layering an adhesion advancing substance is used as an auxiliary agent.

3. A catalyst component according to claim 2, **characterized** in that as an auxiliary agent there are used substances, whose boiling point is higher than the boiling point of the suspension medium, preferably water or alcohols.

4. A catalyst component according to any of the preceding claims, **characterized** in that said constituents of the catalyst component contain one or more components selected from carrier components, magnesium compounds, transition metal compounds, chromium compounds, electron donor compounds and mixtures theteof.

5. A catalyst component according to claim 4, **characterized** in that said carrier components are inorganic magnesium compounds and selected from the group containing halogenides, hydroxy halogenides, alcoxides, hydroxides and silicates.

6. A catalyst component according to claim 4 or 5, **characterized** in that the magnesium compound is magnesium dichloride.

7. A catalyst component according to claim 4, **characterized** in that said constituents are organic magnesium compounds or chlorination products of organic magnesium compounds.

8. A catalyst component according to claim 4, **characterized** in that said constituents contain oxides of silicon, aluminium or titanium, e.g. silica or alumina or titanium oxide.

9. A catalyst component according to any of the preceding claims, **characterized** in that said constituents contain a complex of a magnesium compound and an alcohol.

10. A catalyst component according to claim 9, **characterized** in that said alcohol is an alcohol according to a formula ROH, in which R is an alkyl group containing 1-20 carbon atoms or a substituted alkyl group.

11. A catalyst component according to any of the claims 9-11, **characterized** in that said alcohol is ethanol and said magnesium compound is magnesium dichloride.

12. A catalyst component according to any of the preceding claims, **characterized** in that said constituents contain a compound acting as an electron donor.

13. A catalyst component according to claim 12, **characterized** in that said electron donor compounds also act as adhesion advancing substances.

14. A catalyst component according to any of the preceding claims, **characterized** in that said constituents contain reaction products of a transition metal compound and a magnesium compound.

15. A catalyst component according to claim 14, **characterized** in that said constituents contain reaction products of complexes of a magnesium compound and an alcohol and a transition metal compound.

16. A catalyst component according to Claim 15, characterized in that said constituents also contain compounds acting as electron donors.

17. A catalyst component according to any of the preceding claims, characterized in that said constituents contain ready-to-use catalyst components prepared in advance.

18. A catalyst component according to Claim 17, characterized in that said constituents contain catalyst components having different polymerization sensitivity for example hydrogen and/or comonomer.

19. A method for preparing granular catalyst components of predetermined particle size for polymerization catalysts of olefins, which contains one or more catalytically active transition metal compounds belonging to the groups IV-VIII of the periodic system and combined with a carrier as well as optionally one or more compounds acting as an auxiliary agent or an electron donor, comprising increasing the particle size of catalyst components having a particle size smaller than the desired size using a solution or suspension medium containing catalyst particle constituents by continuously repeating the following steps:
(a) layering onto said component particles the solution or suspension medium containing catalyst particle constituents by moistening said particles with said solution or suspension medium and evaporating said solution or suspension medium,
(b) removing catalyst particles having a desired particle size, and
(c) returning catalyst particles having a particle size smaller than desired to step (a);
until the desired granular size is reached.

20. A method according to claim 19, **characterized** in that said moistening and drying are performed in a fluidized bed, through which a drying gas is blown.

21. A method according to claim 19 or 20, **characterized** in that part of the particles in the fludized bed is sorted according to the particle size, whereby particles smaller than the desired granular size are returned to the fluidized bed.

22. A method according to any of the claims 19-21, **characterized** in that an adhesion advancing agent is used as an auxiliary agent in said layering.

23. A method according to claim 22, **characterized** in that water or alcohols are used as said adhesion advancing agent.

24. A method according to any of the claims 19-23, **characterized** in that said constituents of the catalyst components are selected from carrier components, magnesium compounds, transition metal compounds, electron donor compounds and mixtures thereof.

25. A method according to claim 24, **characterized** in that said carrier components are inorganic magnesium compounds and selected from the group containing halogenides, hydroxy halogenides, alcoxides, hydroxides and silicates.

26. A method according to any of claims 24-25, **characterized** in that the magnesium compound is magnesium dichloride.

27. A method according to claim 24, **characterized** in that said constituents are organic magnesium compounds or chlorination products of organic magnesium compounds.

28. A method according to claim 19, **characterized** in that said constituents contain oxides of silicon, aluminium or titanium, e.g. silica or alumina or titanium oxide.

29. A method according to any of the claims 19-28, **characterized** in that said constituents contain complex compounds of magnesium compounds and alcohols.

30. A method according to claim 29, **characterized** in that said alcohol is an alcohol according to a formula ROH, in which R is an alkyl group containing 1-20 carbon atoms or a substituted alkyl group.

31. A method according to claim 30, **characterized** in that said alcohol is ethanol of said magnesium compound is magnesium dichloride.

32. A method according to any of the preceding claims 19-31, **characterized** in that said constituents contain a compound acting as an electron donor.

33. A method according to claim 32, **characterized** in that said electron donor compounds also act as adhesion advancing substances.

34. A method according to claim 19, **characterized** in that said constituents are reaction products of a transition metal compound and a magnesium compound.

35. A method according to claim 19, **characterized** in that said constituents are reaction products of complex of a magnesium compound and alcohol and a transition metal compound.

36. A method according to claim 19, **characterized** in that said constituents also contain compounds acting as electron donors.

37. A method according to any of the preceding claims 19-36, **characterized** in that said constituents contain ready-to-use catalyst components prepared in advance.

38. A method according to claim 37, **characterized** in that said constituents contain catalyst components having different properties, for example in view of hydrogen and/or comonomer sensitivity.

## Patentansprüche

1. Körnige Katalysatorkomponente mit vorbestimmter Teil-chengröße als Poymerisationskatalysatoren für Olefine, die eine oder mehrere katalytisch wirksame Übergangsme-tallverbindungen, die zu den Gruppen IV-VIII des Periodensystems gehören, enthält und mit einem Träger und wahlweise mit einer oder mehreren Verbindungen, die als Hilfsmittel oder Elektronendonor dienen, kombiniert ist, **dadurch gekennzeichnet,** daß die Katalysatorkomponente durch ein Verfahren gebildet wird, bei dem die Teilchengröße der Katalysatorkomponenten mit einer Teilchengröße, die kleiner als die gewünschte Größe ist, unter Verwendung eines Lösungs- oder Suspensionsmediums, das Katalysatorteilchenbestandteile enthält, vergrößert wird, wobei die folgenden Stufen kontinuierlich wiederholt werden:
(a) Auftragen des Lösungs- und Suspensionsmediums, das Katalysatorteilchenbestandteile enthält, auf die Komponententeilchen, indem die Teilchen mit dem Lösungs- oder Suspensionsmedium befeuchtet werden und das Lösungs- oder Suspensionsmedium verdampft wird,
(b) Entfernen der Katalysatorteilchen mit gewünschter Teilchengröße und
(c) Zurückführen der Katalysatorteilchen mit einer Teilchengröße, die kleiner als die in Stufe (a) gewünschte ist, bis die gewünschte Korngröße erreicht ist.

2. Katalysatorkomponente nach Anspruch 1, **dadurch gekennzeichnet, daß** während des Auftragens eine Haftungsver-stärkungssubstanz als Hilfsmittel verwendet wird.

3. Katalysatorkomponente nach Anspruch 2, **dadurch gekennzeichnet, daß** als Hilfsmittel Substanzen verwendet werden, deren Siedepunkt höher als der Siedepunkt des Suspensionsmediums ist, wobei Wasser oder Alkohole bevorzugt sind.

4. Katalysatorkomponente nach einem der vorangegangenen Ansprüche, **dadurch gekennzeichnet, daß** die Bestandteile der Katalysatorkomponente eine oder mehrere Komponen-te(n) enthalten, die aus Trägerkomponenten, Magnesiumverbindungen, Übergangsmetallverbindungen, Chromverbindungen, Elektronendonorverbindungen und Mischungen daraus gewählt sind.

5. Katalysatorkomponente nach Anspruch 4, **dadurch gekennzeichnet, daß** die Trägerkomponenten anorganische Magnesiumverbindungen sind, die aus der Gruppe Halogenide, Hydroxyhalogenide, Alkoxide, Hydroxide und Silikate gewählt sind.

6. Katalysatorkomponente nach Anspruch 4 oder 5, **dadurch gekennzeichnet, daß** die Magnesiumverbindung Magnesiumdichlorid ist.

7. Katalysatorkomponente nach Anspruch 4, **dadurch gekennzeichnet, daß** die Bestandteile organische Magnesiumverbindungen oder Chlorierungsprodukte aus organischen Magnesiumverbindungen sind.

8. Katalysatorkomponente nach Anspruch 4, **dadurch gekennzeichnet, daß** die Bestandteile Oxide von Silizium, Aluminium oder Titan, zum Beispiel Siliziumdioxid oder Aluminiumoxid oder Titanoxid, enthalten.

9. Katalysatorkomponente nach einem der vorangegangenen Ansprüche, **dadurch gekennzeichnet**, **daß** die Bestandteile einen Komplex aus einer Magnesiumverbindung und einem Alkohol enthalten.

10. Katalysatorkomponente nach Anspruch 9, **dadurch gekennzeichnet, daß** der Alkohol ein Alkohol nach der Formel ROH ist, worin R eine Alkylgruppe, die 1-20 Kohlenstoffatome enthält, oder eine substituierte Alkylgruppe bedeutet.

11. Katalysatorkomponente nach einem der Ansprüche 9-11, **dadurch gekennzeichnet, daß** der Alkohol Ethanol ist und die Magnesiumverbindung Magnesiumdichlorid ist.

12. Katalysatorkomponente nach einem der vorangegangenen Ansprüche, **dadurch gekennzeichnet, daß** die Bestandteile eine Verbindung enthalten, die als Elektronendonor dient.

13. Katalysatorkomponente nach Anspruch 12, **dadurch gekennzeichnet, daß** die Elektronendonorverbindungen ebenfalls als Haftungsverstärkungssubstanzen dienen.

14. Katalysatorkomponente nach einem der vorangegangenen Ansprüche, **dadurch gekennzeichnet, daß** die Bestandteile Reaktionsprodukte aus einer Übergangsmetallverbindung und einer Magnesiumverbindung enthalten.

15. Katalysatorkomponente nach Anspruch 14, **dadurch gekennzeichnet, daß** die Bestandteile Reaktionsprodukte von Komplexen aus einer Magnesiumverbindung und einem Alkohol und einer Übergangsmetallverbindung enthalten.

16. Katalysatorkomponente nach Anspruch 15, **dadurch gekennzeichnet, daß** die Bestandteile ebenfalls Verbindungen enthalten, die als Elektronendonoren dienen.

17. Katalysatorkomponente nach einem der vorangegangenen Ansprüche, **dadurch gekennzeichnet, daß** die Bestandteile gebrauchsfertige Katalysatorkomponenten, die zuvor hergestellt worden sind, enthalten.

18. Katalysatorkomponente nach Anspruch 17, **dadurch gekennzeichnet, daß** die Bestandteile Katalysatorkomponenten mit unterschiedlicher Polymerisationsempfindlichkeit für beispielsweise Wasserstoff und/oder ein Comonomer enthalten.

19. Verfahren zur Herstellung von körnigen Katalysatorkomponenten mit vorbestimmter Teilchengröße als Polymerisationskatalysatoren für Olefine, die eine oder mehrere katalytisch wirksame Übergangsmetallverbindungen, die zu den Gruppen IV-VIII des Periodensystems gehören, und mit einem Träger und wahlweise mit einer oder mehreren Verbindungen, die als Hilfsmittel oder Elektronendonor dienen, enthalten, bei dem die Teilchengröße der Katalysatorkomponenten mit einer Teilchengröße, die kleiner als die gewünschte Größe ist, unter Verwendung eines Lösungs- oder Suspensionsmediums, das Katalysatorteilchenbestandteile enthält, vergrößert wird, wobei die folgenden Stufen kontinuierlich wiederholt werden:
(a) Auftragen des Lösungs- oder Suspensionsmediums, das Katalysatorteilchenbestandteile enthält, auf die Komponententeilchen, in dem die Teilchen mit dem Lösungs- oder Suspensionsmedium befeuchtet werden und das Lösungs- oder Suspensionsmedium verdampft wird,
(b) Entfernen der Katalysatorteilchen mit gewünschter Teilchengröße und
(c) Zurückführen der Katalysatorteilchen mit einer Teilchengröße, die kleiner als die in Stufe (a) gewünschte ist, bis die gewünschte Korngröße erreicht ist.

20. Verfahren nach Anspruch 19, **dadurch gekennzeichnet, daß** das Befeuchten und Trocknen in einem Wirbelbett durchgeführt wird, durch das ein Trockengas geblasen wird.

21. Verfahren nach Anspruch 19 oder 20, **dadurch gekennzeichnet, daß** ein Teil der Teilchen im Wirbelbett nach der Teilchengröße sortiert wird, wobei die Teilchen, die kleiner als die gewünschte Korngröße sind, in das Wirbelbett zurückgeführt werden.

22. Verfahren nach einem der Ansprüche 19 bis 21, **dadurch gekennzeichnet, daß** während des Auftragens ein Haftungsverstärkungsmittel als Hilfsmittel verwendet wird.

23. Verfahren nach Anspruch 22, **dadurch gekennzeichnet, daß** Wasser oder Alkohole als Haftungsverstärkungsmittel verwendet werden.

24. Verfahren nach einem der Ansprüche 19-23, **dadurch gekennzeichnet, daß** die Bestandteile der Katalysatorkomponenten aus Trägerkomponenten, Magnesiumverbindungen, Übergangsmetallverbindungen, Elektronendonorverbindungen und Mischungen daraus gewählt sind.

25. Verfahren nach Anspruch 24, **dadurch gekennzeichnet, daß** die Trägerkomponenten anorganische Magnesiumverbindungen sind, die aus der Gruppe Halogenide, Hydroxyhalogenide, Alkoxide, Hydroxide und Silikate gewählt sind.

26. Verfahren nach einem der Ansprüche 24-25, **dadurch gekennzeichnet, daß** die Magnesiumverbindung Magnesiumdichlorid ist.

27. Verfahren nach Anspruch 24, **dadurch gekennzeichnet, daß** die Bestandteile organische Magnesiumverbindungen oder Chlorierungsprodukte von organischen Magnesiumverbindungen sind.

28. Verfahren nach Anspruch 19, **dadurch gekennzeichnet, daß** die Bestandteile Oxide von Silizium, Aluminium oder Titan, z. B. Siliziumdioxid oder Aluminiumoxid oder Titanoxid, enthalten.

29. Verfahren nach einem der Ansprüche 19-28, **dadurch gekennzeichnet, daß** die Bestandteile Komplexverbindungen aus Magnesiumverbindungen und Alkoholen enthalten.

30. Verfahren nach Anspruch 29, **dadurch gekennzeichnet, daß** der Alkohol ein Alkohol nach der Formel ROH ist, worin R eine Alkylgruppe, die 1-20 Kohlenstoffatome enthält, oder eine substituierte Alkylgruppe bedeutet.

31. Verfahren nach Anspruch 30, **dadurch gekennzeichnet, daß** der Alkohol Ethanol ist und die Magnesiumverbindung Magnesiumdichlorid ist.

32. Verfahren nach einem der vorangegangenen Ansprüche 19-31, **dadurch gekennzeichnet, daß** die Bestandteile eine Verbindung enthalten, die als Elektronendonor dient.

33. Verfahren nach Anspruch 32, **dadurch gekennzeichnet, daß** die Elektronendonorverbindungen ebenfalls als Haftungsverstärkungssubstanzen dienen.

34. Verfahren nach Anspruch 19, **dadurch gekennzeichnet, daß** die Bestandteile Reaktionsprodukte aus einer Übergangsmetallverbindung und einer Magnesiumverbindung sind.

35. Verfahren nach Anspruch 19, **dadurch gekennzeichnet, daß** die Bestandteile Reaktionsprodukte eines Komplexes aus einer Magnesiumverbindung und einem Alkohol und einer Übergangsmetallverbindung sind.

36. Verfahren nach Anspruch 19, **dadurch gekennzeichnet, daß** die Bestandteile ebenfalls Verbindungen enthalten, die als Elektronendonoren dienen.

37. Verfahren nach einem der vorangegangenen Ansprüche 19-36, **dadurch gekennzeichnet, daß** die Bestandteile gebrauchsfertige Katalysatorkomponenten, die zuvor hergestellt worden sind, enthalten.

38. Verfahren nach Anspruch 37, **dadurch gekennzeichnet, daß** die Bestandteile Katalysatorkomponenten mit verschiedenen Eigenschaften, z. B. im Hinblick auf die Wasserstoff- und/oder Comonomerempfindlichkeit, enthalten.

## Revendications

1. Composant catalytique granulé de taille particulaire prédéterminée pour des catalyseurs de polymérisation d'oléfines, qui contient un ou plusieurs composés des métaux de transition actifs catalytiquement faisant partie des Groupes IV-VIII de la Classification Périodique des Eléments et combiné avec un support et facultativement avec un ou plusieurs composés agissant comme agent auxiliaire ou donneur d'électrons, caractérisé en ce que le composant catalyseur est formé par un procédé consistant à augmenter la taille particulaire des composants catalytiques ayant une taille particulaire inférieure à la taille souhaitée en utilisant un milieu en solution ou en suspension contenant des constituants particulaires catalytiques en répétant en continu les étapes suivantes consistant à :
(a) appliquer en couche sur les particules du composant de la solution ou de l'agent de suspension contenant des constituants particulaires catalytiques en mouillant les particules avec la solution ou l'agent de suspension et en mettant en évaporation la solution ou l'agent de suspension,
(b) enlever les particules catalytiques ayant la taille particulaire souhaitée, et
(c) recycler les particules catalytiques ayant une taille particulaire inférieure à celle souhaitée à l'étape (a) jusqu' l'obtention de la taille granulaire souhaitée.

2. Composant catalytique selon la revendication 1, caractérisé en ce que comme agent auxiliaire, on utilise dans l'application en couche, une substance favorisant l'adhérence.

3. Composant catalytique selon la revendication 2, caractérisé en ce que comme agent auxiliaire, on utilise des substances dont le point d'ébullition est supérieur au point d'ébullition du milieu de suspension, de préférence de l'eau ou des alcools.

4. Composant catalytique selon l'une quelconque des revendications précédentes, caractérisé en ce que les constituants du composant catalytique contiennent un ou plusieurs composants choisis à partir de composants de support, composés de magnésium, composés des métaux de transition, composés du chrome, composés de donneurs d'électrons et leurs mélanges.

5. Composant catalytique selon la revendication 4, caractérisé en ce que les composants supports sont des composés de magnésium minéral et sont choisis dans le groupe contenant des halogénures, des hydroxyhalogénures, des alcoxydes, des hydroxydes et des silicates.

6. Composant catalytique selon la revendication 4 ou 5, caractérisé en ce que le composé de magnésium est du dichlorure de magnésium.

7. Composant catalytique selon la revendication 4, caractérisé en ce que les constituants sont des composés de magnésium organique ou des produits de chloruration des composés de magnésium organique.

8. Composant catalytique selon la revendication 4, caractérisé en ce que les constituants contiennent des oxydes de silicium, d'aluminium ou de titane, par exemple de silice ou d'alumine ou d'oxyde de titane.

9. Composant catalytique selon l'une quelconque des revendications précédentes, caractérisé en ce que les constituants contiennent un complexe de composés de magnésium et un alcool.

10. Composant catalytique selon la revendication 9, caractérisé en ce que l'alcool est un alcool selon une formule ROH, dans laquelle R est un groupe alkyle contenant 1-20 atomes de carbone ou un groupe alkyle substitué.

11. Composant catalytique selon l'une quelconque des revendications 9-11, caractérisé en ce que l'alcool est l'éthanol et le composé magnésium est le dichlorure de magnésium.

12. Composant catalytique selon l'une quelconque des revendications précédentes, caractérisé en ce que les constituants contiennent un composé agissant comme donneur d'électrons.

13. Composant catalytique selon la revendication 12, caractérisé en ce que les composés donneurs d'électrons servent également de substances favorisant l'adhérence.

14. Composant catalytique selon l'une quelconque des revendications précédentes, caractérisé en ce que les constituants contiennent des produits réactionnels d'un composé des métaux de transition et un composé de magnésium.

15. Composant catalytique selon la revendication 14, caractérisé en ce que les constituants contiennent des produits réactionnels des complexes d'un composé de magnésium et un alcool et un composé des métaux de transition.

16. Composant catalytique selon la revendication 15, caractérisé en ce que les constituants contiennent également des composés servant de donneurs d'électrons.

17. Composant catalytique selon l'une quelconque des revendications précédentes, caractérisé en ce que les constituants contiennent des composants catalytiques, préparés à l'avance, prêts à l'emploi.

18. Composant catalytique selon la revendication 17, caractérisé en ce que les constituants contiennent des composants catalytiques ayant une sensibilité de polymérisation différente, par exemple l'hydrogène et/ou un comonomère.

19. Procédé pour la préparation de composants catalytiques granulaires de taille particulaire prédéterminée pour catalyseurs de polymérisation d'oléfines, qui contient un ou plusieurs composés des métaux de transition actifs catalytiquement faisant partie des Groupes IV-VIII de la Classification Périodique des Eléments et en combinaison avec un support ainsi que facultativement avec un ou plusieurs composés agissant comme agents auxiliaires ou donneurs d'électrons, consistant à augmenter la taille particulaire des composants catalytiques ayant une taille particulaire inférieure à la taille souhaitée en utilisant une solution ou milieu de suspension contenant des constituants particulaires catalytiques en répétant en continu les étapes suivantes consistant à :
(a) appliquer en couche sur les particules de composant de la solution ou du milieu de suspension contenant les constituants particulaires catalytiques en mouillant les particules avec la solution ou le milieu de suspension et en mettant en évaporation la solution ou le milieu de suspension,
(b) enlever les particules catalytiques ayant une taille particulaire souhaitée, et
(c) recycler les particules catalytiques ayant une taille particulaire inférieure à la taille souhaitée à l'étape (a) jusqu'à l'obtention de la taille granulaire souhaitée.

20. Procédé selon la revendication 19, caractérisé en ce que le mouillage et le séchage sont effectués dans un lit fluidisé à travers lequel est insufflé un gaz de séchage.

21. Procédé selon la revendication 19 ou 20, caractérisé en ce qu'une partie des particules dans le lit fluidisé est triée selon la taille particulaire, les particules inférieures à la taille granulaire souhaitée étant renvoyées au lit fluidisé.

22. Procédé selon l'une quelconque des revendications 19-21, caractérisé en ce que l'on utilise un agent favorisant l'adhérence comme agent auxiliaire dans la formation de couche.

23. Procédé selon la revendication 22, caractérisé en ce que l'on utilise de l'eau et des alcools comme agents favorisant l'adhérence.

24. Procédé selon l'une quelconque des revendications 19-23, caractérisé en ce que les constituants des composants catalytiques sont choisis à partir de composants support, de composés de magnésium, de composés des métaux de transition, des composés de donneurs d'électrons et leurs mélanges.

25. Procédé selon la revendication 24, caractérisé en ce que les composants du support sont des composés de magnésium minéral et sont choisis dans le groupe contenant des halogénures, des hydroxyhalogénures, des alcoxydes, des hydroxydes et des silicates.

26. Procédé selon l'une quelconque des revendications 24-25, caractérisé en ce que le composé de magnésium est du dichlorure de magnésium.

27. Procédé selon la revendication 24, caractérisé en ce que les constituants sont des composés de magnésium organique ou des produits de chloruration de composés de magnésium organique.

28. Procédé selon la revendication 19, caractérisé en ce que les constituants contiennent des oxydes de silicium, aluminium ou titane, par exemple silice ou alumine ou oxyde de titane.

29. Procédé selon l'une quelconque des revendications 19-28, caractérisé en ce que les constituants contiennent des composés complexes des composés de magnésium et des alcools.

30. Procédé selon la revendication 29, caractérisé en ce que l'alcool est un alcool selon la formule ROH, dans laquelle R est un groupe alkyle contenant 1-20 atomes de carbone ou un groupe alkyle substitué.

31. Procédé selon la revendication 30, caractérisé en ce que l'alcool est l'éthanol du composé de magnésium qui est le dichlorure de magnésium.

32. Procédé selon l'une quelconque des revendications précédentes 19-31, caractérisé en ce que les constituants contiennent un composé servant de donneur d'électrons.

33. Procédé selon la revendication 32, caractérisé en ce que les composés de donneurs d'électrons servent également de substances favorisant l'adhérence.

34. Procédé selon la revendication 19, caractérisé en ce que les constituants sont des produits réactionnels d'un composé des métaux de transition et un composé de magnésium.

35. Procédé selon la revendication 19, caractérisé en ce que les constituants sont des produits réactionnels du complexe d'un composé de magnésium et d'alcool et un composé des métaux de transition.

36. Procédé selon la revendication 19, caractérisé en ce que les constituants contiennent également des composés servant de donneurs d'électrons.

37. Procédé selon l'une quelconque des revendications précédentes 19-36, caractérisé en ce que les constituants contiennent des composants catalytiques prêts à l'emploi, préparés en avance.

38. Procédé selon la revendication 37, caractérisé en ce que les constituants contiennent des composants catalytiques ayant différentes propriétés, par exemple à l'égard de la sensibilité hydrogène et/ou comonomère.
